(19) Europäisches Patentamt

European Patent Office

Office européen des brevets

(11) **EP 1 046 896 A2**

(12) **EUROPEAN PATENT APPLICATION**

(43) Date of publication:
25.10.2000 Bulletin 2000/43

(51) Int. Cl.$^7$: **G01M 11/00**

(21) Application number: **00115396.4**

(22) Date of filing: **06.12.1995**

(84) Designated Contracting States:
**DE ES FR GB IT**

(30) Priority: **30.11.1995 GB 9524485**

(62) Document number(s) of the earlier application(s) in
accordance with Art. 76 EPC:
**95938555.0 / 0 864 081**

(71) Applicant:
**Corning Communications Limited
Whiston, Merseyside L35 1RZ (GB)**

(72) Inventors:
• **Wallace, Colin
Deanpark, Renfrew PA4 0XW (GB)**

• **Uttamchandani, Deepak
Glasgow GA3 2AP (GB)**
• **Andonovic, Ivan
Bearsden, Glasgow G61 3AT (GB)**

(74) Representative:
**Poole, Michael John
Corning Communications Limited
Patents and Licensing Department
Quantum House
Maylands Avenue
Hemel Hempstead, Herts. HP2 4SJ (GB)**

Remarks:
This application was filed on 17 - 07 - 2000 as a
divisional application to the application mentioned
under INID code 62.

(54) **Device for interrogating an optical fibre network**

(57)    Apparatus for interrogating an optical fibre network, comprises:

(i) a device (18, 20, 22) for sending an interrogation signal into the network, the interrogation signal comprising a sequence of optical pulses forming a code; and
(ii) a detection system (24, 26, 28) which correlates a signal received from the network in response to the interrogation signal with a reference signal that is generated by the device (18) and corresponds to a time delayed version of the interrogation signal.

The detection system comprises a semiconductor laser amplifier (24) which amplifies the signal received from the network and which is powered by the reference signal and so acts as an AND gate to the reference signal and the reflected signal with gain; and an integrator circuit (28) that integrates the output of the semiconductor laser amplifier (24) to generate a value for the correlation of the signal received from the optical network and the reference signal for a predetermined time delay of the reference signal.

Fig.3.

**Description**

This invention relates to devices for interrogating optical fibre networks, for example networks that incorporate one or more sensors, or line networks that are employed for communications purposes. One particularly important area in which the invention may be employed is in the interrogation of systems such as passive optical networks by reflectometry methods in order to locate faults in the system.

Optical networks may be monitored for fault detection and location by optical time domain reflectometry (OTDR) in which a pulse of light is injected into one end of the system and the reflection of the pulse is observed as a function of time. One problem associated with such reflectometry methods is the lack of dynamic range of the system when relatively high resolution of the fault is required: in order to achieve high resolution, a very narrow light pulse is required, for example of $10^{-7}$s duration), but narrowness of the light pulse restricts the optical energy of the pulse, with the result that the reflected signal can have very poor signal to noise ratio. This is especially true of branched passive optical networks where the intensity of the transmitted pulse is reduced at each branching point in the network and so necessitates interrogation systems that have a high dynamic range. In order to overcome this problem it has been proposed to replace the pulse by a signal comprising a sequence of pulses forming a code e.g. a pseudo random binary sequence (PRBS) and to perform a correlation of the reflected signal with a time delayed version of the original signal, so called "correlation OTDR". Since the reflected signal will comprise a number of reflections of the original signal from the reflectors in the system, the correlation will thus comprise a number of autocorrelation functions of the original signal, each one corresponding to one of the Fresnel reflections in optical system. By adjusting the time delay of the reference signal derived from the original signal, the peaks of the correlation function corresponding to the Fresnel reflections of interest can be monitored through the formation of the correlation function of the reflected signal and a suitably delayed reference signal. This system has the advantage that while the resolution is determined by the width of the individual pulses, the dynamic range is determined by the total energy of the pulse sequence, with the result that the dynamic range of the system can, in principle, be increased many fold without sacrificing resolution. Such systems have been proposed for example by Nazarathy et al (J. Lightwave Technol. vol 7 <u>1</u> (1989) which describes the use of Golay code pairs for observing an optical network. Golay codes were originally developed for the electrical domain and are bipolar codes that exist in pairs and have the property that when the codes are autocorrelated and the autocorrelations of the pair of codes are summed, a "perfect" autocorrelation is formed, i.e. one that has no non-zero side lobes. Bipolar Golay codes of $2n$ elements in length may be generated by the formula:

$$n \text{ elements} \qquad\qquad 2n \text{ elements}$$

$$\begin{pmatrix} A \\ B \end{pmatrix} \quad \longrightarrow \quad \begin{pmatrix} AB \\ A\overline{B} \end{pmatrix}$$

where the $2n$ element codes are formed by concatenating the $n$ element codes $A$ and $B$, and $A$ and $\overline{B}$, the code $\overline{B}$ representing the inverse of code B.
Starting with the one element Golay pair the Golay codes of length 2, 4, 8 are readily derived:

$$\begin{Bmatrix} 1 \\ 1 \end{Bmatrix} \rightarrow \begin{Bmatrix} 1, & 1 \\ 1, & -1 \end{Bmatrix} \rightarrow \begin{Bmatrix} 1, & 1 & 1, & -1 \\ 1, & 1 & -1, & 1 \end{Bmatrix}$$

$$\rightarrow \begin{Bmatrix} 1, & 1, & 1 & -1, & 1, & 1, & -1, & 1 \\ 1, & 1, & 1 & -1, & -1, & -1, & 1, & -1 \end{Bmatrix}$$

This procedure may be continued on to generate sequences of lengths which are powers of two. For any such codes, the function:

$$A*A + B*B$$

will have no non-zero values other than the zero phase difference peak.

However, bipolar codes are inappropriate for use in optical reflectometry methods which require unipolar codes, and some means must therefore be used to convert the bipolar code into unipolar form. The method employed by Nazarathy et al (supra), however, has the disadvantage that the bias that has been applied to the bipolar code to render it unipolar must be subtracted during processing of the reflected signals, which requires processing of the signals in the electronic domain. This necessitates detection of the optical signals with a very high bandwith photodetector if high resolution is to be achieved, but the sensititivity of photodetectors is highly dependent on the bandwidth of the signals (e.g. at bit rates of the order of 5 Gbit s$^{-1}$) with the result that the dynamic range of the system is still limited, in practice, unless resolution is sacrificed.

A novel way of generating unipolar codes for use in optical reflectometry methods, and especially for generating unipolar Golay codes that have "perfect" or almost "perfect" autocorrelation functions, is described in the applicants' co-pending European Patent Application No. 95938555. According to one aspect of European Patent Application No. 95938555, there is provided apparatus for interrogating an optical fibre network, which comprises:

(i) a device for sending an interrogation signal into the network, the interrogation signal comprising a sequence of optical pulses forming a code; and
(ii) a detection system which correlates a signal received from the network in response to the interrogation signal with a reference signal that is generated by the device and corresponds to a time delayed version of the interrogation signal,

wherein

(a) the device for sending the interrogation signal into the optical network generates the signal in the form of a sequence of optical pulses forming a unipolar Golay code pair ($A$ and $B$) which has been formed by replacing each bit of a bipolar Golay code pair with a two bit unipolar sequence 10 or 01 depending on the polarity of the bipolar code bit;
(b) the detection system generates values of the autocorrelation functions of the Golay pairs ($A\,{}^*A$) and ($B\,{}^*B$) and also correlation functions of each of the Golay components with their ones complement ($A^*\,\overline{A}$) and ($B^*\,\overline{B}$); and
(c) the apparatus includes means for generating values of the correlation function

$$[(A{}^*A) - (A^*\,\overline{A})] + [(B{}^*B) - (B^*\,\overline{B})]$$

for a predetermined time delay of the reference signal.

The bipolar code that is used to form the unipolar code thus comprises code sequences forming a Golay code pair and is converted to a unipolar Golay code pair. For example positive elements can be coded as 10 while negative elements can be coded as 01. Thus Golay pair A = 1,1,1,-1 and B=1,1,-1,1 would become A=10101001 and B=10100110. Of course, positive elements could be coded as 01 and negative elements as 10 if desired.

Such unipolar Golay codes have the advantage that it is possible to form a correlation function of the formula (1).

$$[(A{}^*A) - (A^*\,\overline{A})] + [(B{}^*B) - (B^*\,\overline{B})] \tag{1}$$

wherein

A and B are sequences forming the Golay code pair that is used as the interrogation signal, and

$\overline{A}$ and $\overline{B}$ are ones complements of $A$ and $B$ respectively,

The autocorrelation function (1) has an almost perfect form in that it is zero apart from the zero phase difference peak and the two bits lying adjacent thereto. It is therefore possible by employing such a function to resolve reflectors in an optical network provided that their distances to the head end where the apparatus is located differ by a sufficient amount to cause their reflections to be separated by at least two bits of the modified Golay code sequence, and the fact that the autocorrelation function is zero at such phase differences, means cross-talk will be greatly reduced.

The use of the unipolar code employed according to European Patent Application No. 95938555 has the advantage that the signal processing can be conducted in the optical domain in real time. Thus, for example, the detection system may comprise

a) an AND gate into which are fed the signal received from the optical line system and the reference signal; and

b) an integrator circuit that integrates the output of the AND gate (after conversion to an electrical signal if necessary) to generate a value for the correlation of the signal received from the optical network and the reference signal for a predetermined time delay of the reference signal.

According to the present invention, there is provided an apparatus for interrogating an optical fibre network, which comprises:

(i) a device for sending an interrogation signal into the network, the interrogation signal comprising a sequence of optical pulses forming a code; and

(ii) a detection system which correlates a signal received from the network in response to the interrogation signal with a reference signal that is generated by the device and corresponds to a time delayed version of the interrogation signal,

wherein the detection system comprises a semiconductor laser amplifier which amplifies the signal received from the network and which is powered by the reference signal; and an integrator circuit that integrates the output of the semiconductor laser amplifier to generate a value for the correlation of the signal received from the optical network and the reference signal for a predetermined time delay of the reference signal.

Although such apparatus has already been proposed by C. G. Wallace et al (IEE Colloquium on Guided Wave Optical Signal Processing; 8th June 1995, London; digest no. 1995/128: Electro-Optical Correleation Utilising a Semiconductor Laser Amplifier for Spread Spectrum Systems), this disclosure constitutes non-prejudicial prior art according to Article 55(1)(a)EPC.

When supplied with a drive current the semiconductor laser amplifier (SLA) passes the incoming optical signal with amplification, while if the drive current is absent the signal is absorbed. Thus, the code sequence that is used to generate the reference signal may be passed, after the appropriate time delay, to the drive current input of the SLA, and the optical input of the SLA is connected to the optical line system. The output of the SLA is fed into a light detector circuit which can act as or be input directly into the integrator circuit, for example it can be fed into a power meter. The use of an SLA as the AND gate has the advantage that not only is it capable of switching at a speed appropriate to the bit rate required, it generates a high degree of gain (e.g. 12 dB fibre-to-fibre gain) with the result that the relative insensitivity of the photodetector at such bit rates is reduced. Furthermore, unlike the use of integrated optical modulators as described by Al-Raweshidy et al (Optics Communication Vol 81. (1991) pp. 171-174) which will not switch properly unless the polarisation of the reflected signal is correct, SLAs are polarisation insensitive and so will operate whatever the polarisation of the reflected signal.

The integrator circuit can be any conventional integrator circuit having a time constant greater than the time period during which one code sequence of the signal is received from the optical line system and will normally be provided by employing a low bandwidth photodetector. The output of the integrator circuit will thus be a dc signal whose level corresponds to the value of the correlation function of the time delayed reference signal and the reflected signal at any one given time delay. Such a detection system provides a very simple means of forming the correlation function values at high speed since no, or very little, digital computation is required. Any d.c. component of the SLA and any noise generated in the system will be substantially reduced by the nature of the autocorrelation function 1 above.

The pulse rate of the code sequence should be sufficiently high to provide adequate resolution, for example in the range of $10^7$ to $10^{10}$ bits s$^{-1}$, and the number of individual pulses in the code sequence should be sufficient to enable each reflector in the system to be uniquely identified. Thus the code sequence should be sufficiently long that the start of the sequence reflected from the most distant point in the optical line system is received by the detection system when or before the end of the code sequence is transmitted.

In respect of each Golay code, e.g. code A, the autocorrelation (A*A) and the correlation with its complement (A* $\overline{A}$) may be conducted sequentially or simultaneously, but preferably simultaneously (in which case separate detection systems are required for A*A and A* $\overline{A}$), the complement A being generated by passing the time delayed reference signal through an inverter that will replace 1 bits by zero and vice versa or alternatively being generated as a separate code. An integrator circuit is employed to obtain values for each of the two correlations and one is then subtracted from the other. The procedure is then repeated for the Golay complement B and the resultant values are then summed to generate the values for the resultant autocorrelation function (1). The number of computational steps required for generating the individual values of the autocorrelation function (1) is thus kept to a minimum, thereby enabling the values to be obtained in real time at very high signal bit rates (and thus high resolution).

A further advantage of the signal coding is the high duty cycle (50%) which ensures a high signal-to-noise ratio of the reflected signal.

Although the value of the autocorrelation function for any given phase difference can be generated very quickly and simply, it will usually be a time consuming process to generate the entire autocorrelation function of the reflected signal in order to map the whole network, since the interrogation signal will typically contain in the order of $10^5$ to $10^6$ individual bits or more (depending, obviously, on the size of the network). Fortunately, however, this will be necessary only rarely for housekeeping purposes after any system has been commissioned, and normally all that will be required is to observe the intensity of the reflected signal from each of the reflectors in the network that is being monitored, e.g. for each of the end users and, if desired, from any additional reflectors located at branching points of the system. Once the reflection pattern of the line system is known, the time delays required to observe the reflectors can be stored in memory, and the individual reflectors can therefore be polled without the necessity to observe the remaining parts of the system. If a system fault occurs in part of the line system that is not being monitored, for example high signal attenuation occurring in a region between a pair of Fresnel reflectors, this will manifest itself by a change in the relative intensities of the peaks from the reflectors on either side of the fault, in which case the correlation function for that part of the system between the reflectors can be generated in order to locate the fault. Since this procedure involves observing only a small part of the line system, it will take only a fraction of the time needed to observe the line system as a whole.

The output of the sensing apparatus detector will be a dc electrical or optical signal proportional to the value of the correlation function of the reference signal and the reflection for a given phase difference. However, it also will have a large d.c. component due to amplified spontaneous emission, and it may, in some instances, be desirable to move the desired output from the SLA away from the d.c. level. This can be achieved by superimposing a low frequency sine wave on to the high frequency code at the laser input. The output of the correlation can ten be measured using an a.c. coupled detector with a lock-in amplifier. However, the use of the autocorrelation function (1) has the advantage, as mentioned above, that all d.c. components that are due to the SLA cancel one another out, with the result that much simpler d.c. circuitry can be used.

The apparatus according to the invention is not limited to use in reflectometry methods for monitoring line optical fibre networks, but can instead be employed with systems that employ throughput sensors for example ladder sensor networks.

The present invention will now be described by way of example, with reference to the accompanying drawings, in which:

Figure 1    is a functional schematic showing the formation of the autocorrelation function of a pair of bipolar Golay codes;

Figure 2    is a schematic showing the formation of the autocorrelation function of a pair of modified, unipolar Golay codes;

Figure 3    is a schematic showing the set up of apparatus according to the invention for interrogating an optical line system; and

Figure 4    is a schematic showing an alternative sensor set up.

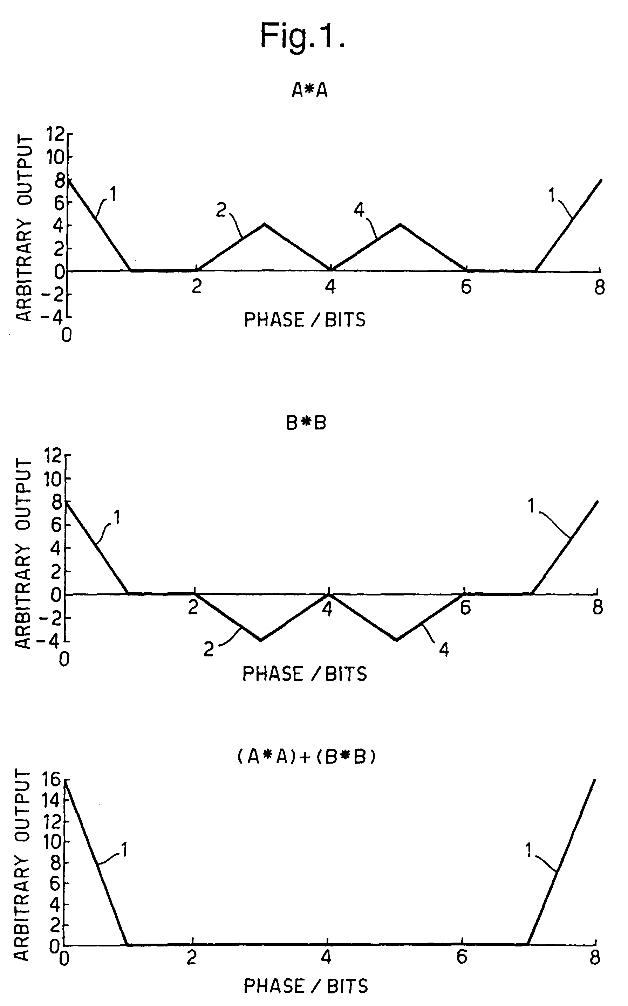

Referring to the accompanying drawings, Figure 1 shows the autocorrelation function of a bipolar Golay code A and its Golay complement B. Each code is an 8 bit code, code A having the form 111-111-11 and its complement B having the form 111-1-1-11-1. When codes are individually autocorrelated, each autocorrelation has a zero phase peak 1 and in addition a number of lobes 2 and 4. The lobes in the two autocorrelations $A*A$ and $B*B$ are of opposite polarity so that when they are added to produce $(A*A) + ((B*B)$, a "perfect" autocorrelation is formed which is zero everywhere apart from the zero phase peak 1.

Although such codes can be used for electrical signals, they are not appropriate for optical signals which can only be unipolar. Thus, according to the invention, the bipolar codes are modified or pre-coded into unipolar form for example by replacing each element 1 with the bit pair 10, and each element -1 with the bit pair 01 so that, for example, the bipolar code A would become a 16 bit code 1010100110100110. In addition to the modified Golay pair A and B, their ones complements $\overline{A}$ and $\overline{B}$ are formed by replacing each zero in the modified code by 1 and vice versa. The four components so formed may be autocorrelated by means of the autocorrelation formula (1)

$$[(A*A) - (A*\overline{A})] + [(B*B) - (B*\overline{B})] \tag{1}$$

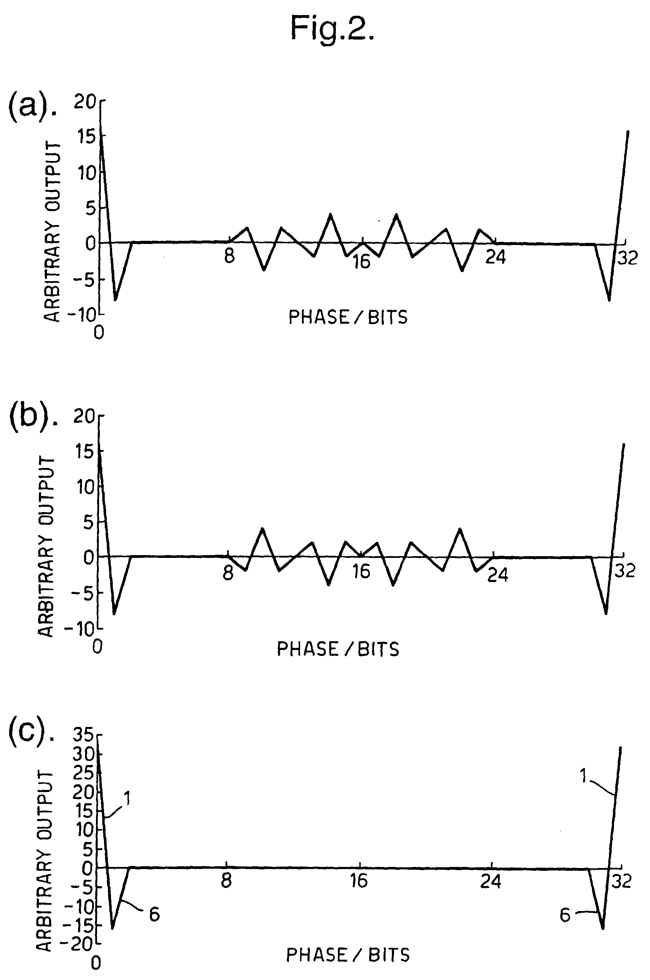

to form an almost perfect autocorrelation shown in figure 2. This figure shows in (a) the autocorrelation $(A*A) - (A*\overline{A})$ of one of the Golay codes for a 32 bit modified code, and in (b) the autocorrelation $(B*B) - (B*\overline{B})$ of the Golay complement of A. When the two autocorrelation functions are summed to give the resultant autocorrelation shown in (c) all the non-zero lobes cancel out with the exception of one lobe 6 adjacent to, and on each side of, the zero phase difference peak 1.

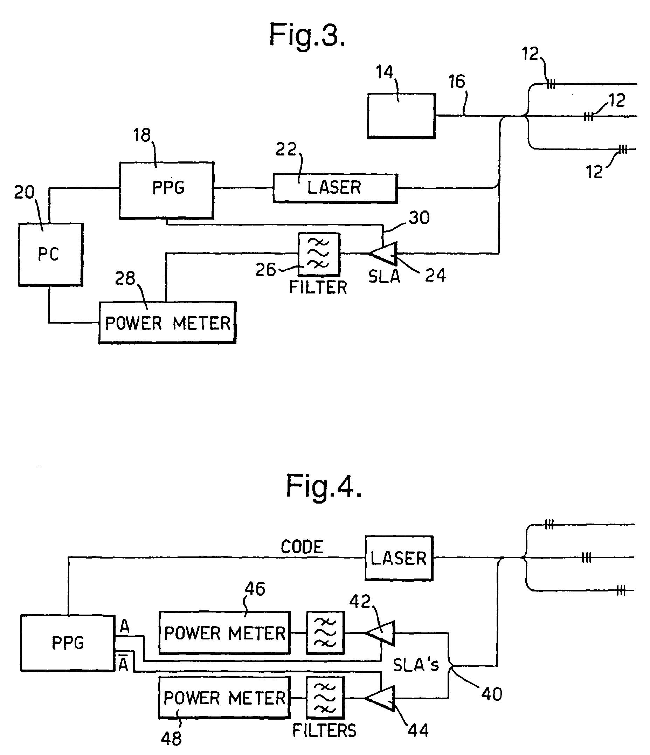

One form of apparatus that employs this form of modified Golay coding is shown in figure 3. The apparatus is used to interrogate a passive optical network 10 shown schematically merely as a number of reflectors 12 representing end users etc an exchange or head-end 14 and an optical line 16 connecting them. In the region of the exchange, apparatus for interrogating the network is located, which comprises a pulse pattern generator (PPG) 18 controlled by a microcomputer 20, which generates alternating unipolar Golay code pairs and sends them to laser 22. The laser 22 then launches the modified Golay codes into the optical line 16 at the appropriate wavelength. The signal that is reflected by the passive optical network is received by a semiconductor laser amplifier 24 whose output is sent to a power meter 28 via a band pass filter 26 whose purpose is to reduce noise generated by the SLA. The PPG 18 also generates a time delayed version of the coded interrogation signal which is fed via line 30 to the electrical drive current input of the amplifier 24 with the result that the amplifier acts as an AND gate whose output is an amplified version of the reflected signal ANDed with the time shifted initial signal. The output signal is optically filtered by filter 26, converted to an electrical signal by a conventional photodetector circuit (not shown) and the signal is ten fed into power meter 28. The power meter 28 comprises an integrator circuit which may in the simplest form simply be formed from a low pass RC circuit, but which has a time constant greater than the time taken for one complete modified Golay component to be transmitted. The output value of the signal from the power meter will constitute a summation of the bits of the reflected signal ANDed with the time delayed version of the signal and will thus form a value of the correlation function of the interrogation signal and its reflection for one value of the phase difference. This value is then stored in the microcomputer 20.

If the preferred autocorrelation function (1) is to be generated, it is necessary to generate the complements $\bar{A}$ and B of each of the Golay complements and to correlate these with the reflected signal. This may be achieved simultaneously as shown in figure 4 in which the reflected signal is split by a 3dB coupler 40 into a pair of parallel semiconductor laser amplifiers 42 and 44, one of which is driven by reference signal A and the other by it's complement $\bar{A}$ when code A is the input light signal. The resulting signals are filtered and converted to electrical signals by photodetector circuits or power meters 46 and 48 and then recorded on a p.c. for signal processing.

**Claims**

1. Apparatus for interrogating an optical fibre network, which comprises:

    (i) a device (18,20,22) for sending an interrogation signal into the network, the interrogation signal comprising a sequence of optical pulses forming a code; and
    (ii) a detection system (24, 26, 28) which correlates a signal received from the network in response to the interrogation signal with a reference signal that is generated by the device (18) and corresponds to a time delayed version of the interrogation signal,

    wherein the detection system comprises a semiconductor laser amplifier (24) which amplifies the signal received from the network and which is powered by the reference signal; and an integrator circuit (28) that integrates the output of the semiconductor laser amplifier (24) to generate a value for the correlation of the signal received from the optical network and the reference signal for a predetermined time delay of the reference signal.

2. Apparatus as claimed in claim 1, wherein the integrator circuit (28) comprises a low-pass RC filter that has a time constant greater than the time taken to send one complete interrogation signal.

3. Apparatus as claimed in claim 1 or 2, wherein the semiconductor laser amplifier (42) is arranged in parallel with an additional semiconductor laser amplifier (44) into which is fed the signal received from the network system and a complement of the reference signal.

# Fig.1.

A*A

B*B

(A*A)+(B*B)

# Fig.2.

# Fig.3.

# Fig.4.